# EUROPÄISCHE PATENTSCHRIFT

(11) **EP 0 560 237 B1**
(45) Veröffentlichungstag und Bekanntmachung des Hinweises auf die Patenterteilung: **28.10.1998**
(21) Anmeldenummer: 93103616.4
(22) Anmeldetag: 06.03.1993
(51) Int. Cl.: H04B 3/54, H04J 3/06, H04M 1/72

(54) **Verfahren zur Synchronisierung von Basisstationen in einem Funktelefonsystem**
Method for the synchronisation of base radio stations in a radio telephone system
Procédé de synchronisation de stations de radiodiffusion de base dans un système de radiotéléphonie

(30) Priorität: 13.03.1992 DE 4207986
(43) Veröffentlichungstag der Anmeldung: 15.09.1993
(73) Patentinhaber: ALCATEL ALSTHOM COMPAGNIE GENERALE D'ELECTRICITE, 75008 Paris (FR)
(72) Erfinder: Veloso, Artur, W-7320 Göppingen (DE); Geywitz, Klaus, W-7016 Gerlingen (DE); Endler, Joachim, W-7000 Stuttgart 40 (DE)
(74) Vertreter: Müller, Joachim, Dipl.-Ing.

(56) Entgegenhaltungen:
- DE-A- 3 942 320
- DE-C- 21 824
- PATENT ABSTRACTS OF JAPAN vol. 11, no. 245 (E-531)(2692) 11. August 1987

## Beschreibung

Die Erfindung betrifft ein Verfahren zur Synchronisierung von Basisstationen in einem Funktelefonsystem. Derartige Systeme bestehen aus einer Vermittlungsanlage, an die im allgemeinen drahtgebundene Endgeräte angeschlossen sind, und mindestens einer Basisstation, von der aus über Funk schnurlose Endgeräte Zugriff zu der Vermittlungsanlage haben. Der mobile Teil des Systems wirkt aus Sicht der Vermittlungsanlage wie eine Anzahl von Teilnehmern, die über analoge oder digitale Leitungsschnittstellen mit der Vermittlungsanlage verbunden sind. Bei mehreren Basisstationen ist es erforderlich, für alle gleichzeitig abwechselnd eine Zeitdauer zum Senden und eine Zeitdauer zum Empfangen vorzusehen, damit bei sich überlappenden Funkbereichen zweier oder mehrerer Basisstationen eine Störung der Teilnehmer untereinander ausgeschlossen wird.

Es ist bekannt, die Synchronisierung der Basisstationen derart durchzuführen, daß von einer Basisstation, der sogenannten Master-Basisstation, ein Rechtecksignal zu den weiteren Basisstationen, den sogenannten Slave-Basisstationen, übertragen wird. Im Rhythmus der Frequenz des Rechtecksignals erfolgt dann jeweils die Schaltung aller Basisstationen in den Sendebeziehungsweise in den Empfangszustand, vgl. Instruction Manual "Silver Link 2000", Public Base Station, der Fa. Motorola, 1991. Zur Übertragung des Synchronisiersignals wird in diesem System ein Leitungspaar von Basisstation zu Basisstation geschaltet. Um die Basisstationen einheitlich aufbauen zu können, ist in jeder ein Generator für das Synchronisiersignal vorgesehen, unabhängig davon, ob die Basisstation als Master fungiert oder nicht. Die Bestimmung als Master erfolgt durch eine definierte Brückenbeschaltung.

Weiterhin ist eine Anordnung zur Kommunikation in einem Bergwerk, insbesondere in einem Salzbergwerk, bekannt, vgl. DE-A1-39 42 320, bei der eine Zentrale über Leitungen mit mehreren ortsfesten Sende-Empfangsstationen verbunden ist und bei der eine Synchronisationseinrichtung angeordnet ist, die bewirkt, daß alle ortsfesten Sende-Empfangsstationen exakt gleiche Sendefrequenzen aufweisen. In dieser Veröffentlichung gibt es jedoch keinen Hinweis darauf, daß eine Stromversorgungsleitung für die Sende-Empfangsstationen gleichzeitig als Synchronisationsleitung verwendet wird.

Das Problem der Synchronisation von elektronischen Einrichtungen wird auch in der englischsprachigen Zusammenfassung der japanischen Patentanmeldung JP-A-62-58 742 erwähnt, es fehlen jedoch Lösungsangaben zur Art und Weise der Übertragung von Synchronisationssignalen bei Funktelefonsystemen.

Aufgabe der Erfindung ist es nun, die Synchronisierung der Basisstationen ohne diesen Leitungs- und Schaltungsaufwand zu erreichen.

Diese Aufgabe wird wie im Anspruch 1 beschrieben gelöst.

Bei der Lösung wird vorteilhafterweise das zur Übertragung der Nachrichten und der Stromversorgung dienende Kabel zwischen Vermittlungsanlage und Basisstationen ausgenutzt, um über den gleichen Weg die Synchronisierungsinformation zu übertragen. Damit entfallen die sonst notwendigen Verbindungen zwischen den Basisstationen. Die Synchronisierungsspannung wird zentral in der Vermittlungsanlage erzeugt, so daß der entsprechende Generator in der Basisstation entfällt. Spezielle schaltungstechnische Maßnahmen in den Basisstationen sind somit nicht erforderlich. Das Verfahren erlaubt ohne zusätzlichen Aufwand die Vergrößerung der Anzahl der Basisstationen und eine störfreie Standortveränderung der schnurlosen Endgeräte.

Ausgestaltungen der Erfindung sind in den Unteransprüchen beschrieben.

Die Erfindung wird nachstehend an einem Ausführungsbeispiel erläutert. In der dazugehörigen Zeichnung zeigen
- Fig. 1: ein Blockschaltbild einer Nebenstellenanlage mit mobilen Teilnehmern,
- Fig. 2: eine Zusammenschaltung einer Steuereinheit für das Funknetz mit einer Basisstation zur Übertragung einer amplitudenmodulierten Speisespannung und
- Fig. 3: eine Zusammenschaltung einer Steuereinheit für das Funknetz mit einer Basisstation zur Übertragung einer Speisespannung mit wechselnder Polarität.

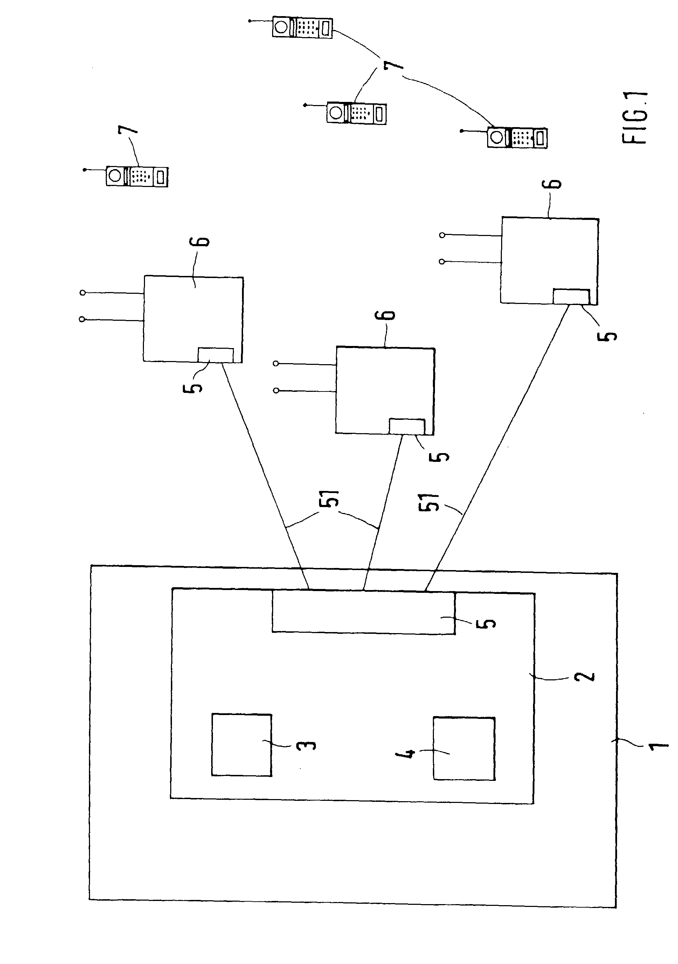

In Fig. 1 sind die zur Erläuterung des Verfahrens notwendigen Baugruppen dargestellt. So gehört zu der Nebenstellenanlage 1 eine Steuereinheit für das Funknetz 2, die mit der Nebenstellenanlage 1 integriert sein kann, so wie es das DECT (Digital European Cordless Telecommunication)-Protokoll vorsieht. Es ist aber auch möglich, die Steuereinheit für das Funknetz 2 als nachrüstbaren Vorsatz für die Nebenstellenanlage 1 auszuführen. Die Steuereinheit für das Funknetz 2 enthält einen Generator für die Synchronisierungsspannung 3 und eine Stromversorgung 4 sowie eine SO-Schnittstelle 5, an die über einen jeweiligen S0-Bus 51 mehrere Basisstationen 6 angeschlossen sind. Die Basisstationen 6 ermöglichen die Verbindung der schnurlosen Endgeräte 7 zur Nebenstellenanlage 1.

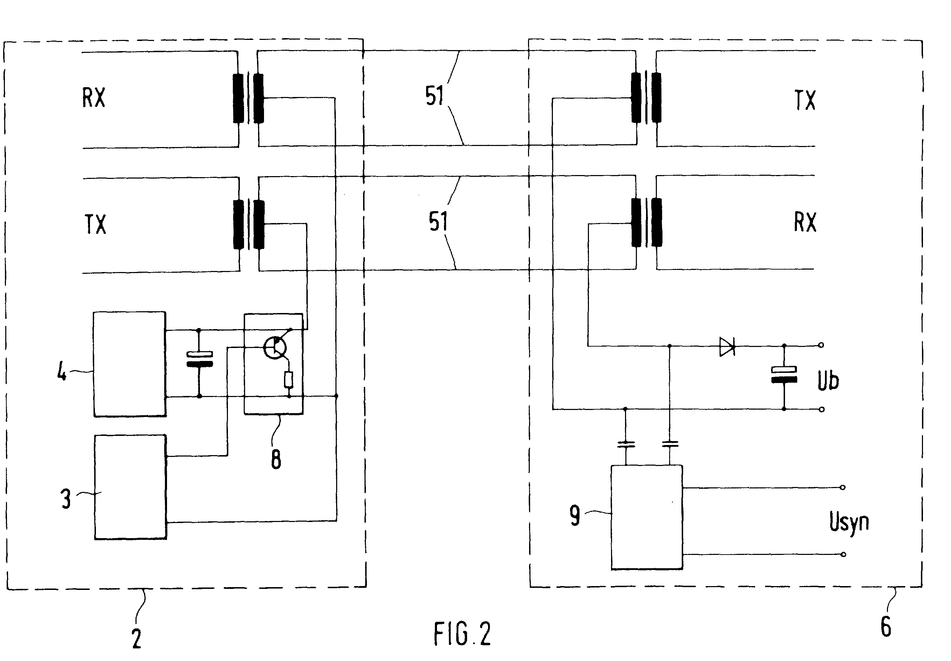

Gemäß Fig. 2 erfolgt die Stromversorgung der Basisstation 6 von der Steuereinheit für das Funknetz 2 über den S0-Bus 51, wobei für den Speisestrom ein Phantomkreis gebildet wird. Dazu sind die Ausgänge der Stromversorgung 4 mit den Mittelanzapfungen der anlagenseitigen Leitungsübertrager verbunden. Auf der Seite der Basisstation führen die Mittelanzapfungen der Leitungsübertrager beispielsweise zu einem Wandler, mit dem ein dem Leistungsbedarf der Basisstation 6 angepaßter Strom eingestellt wird. Über den gleichen Weg wird nun die Synchronisierungsspannung übertragen, indem in der Steuereinheit für das Funknetz 2 die Speisespannung über einen Modulator 8 mit der von einem Generator 3 gelieferten Synchronisierungsspannung amplitudenmoduliert und zur Basisstation 6 übertragen wird. In der Basisstation 6 wird die Synchronisierungsspanunng U_{syn} von einem Receiver 9 aus dem Speisestromkreis ausgekoppelt. Im Takt der Synchronisierungsspannung U_{syn} werden alle Basisstationen 6 abwechselnd in den Sende- und Empfangsszustand geschaltet.

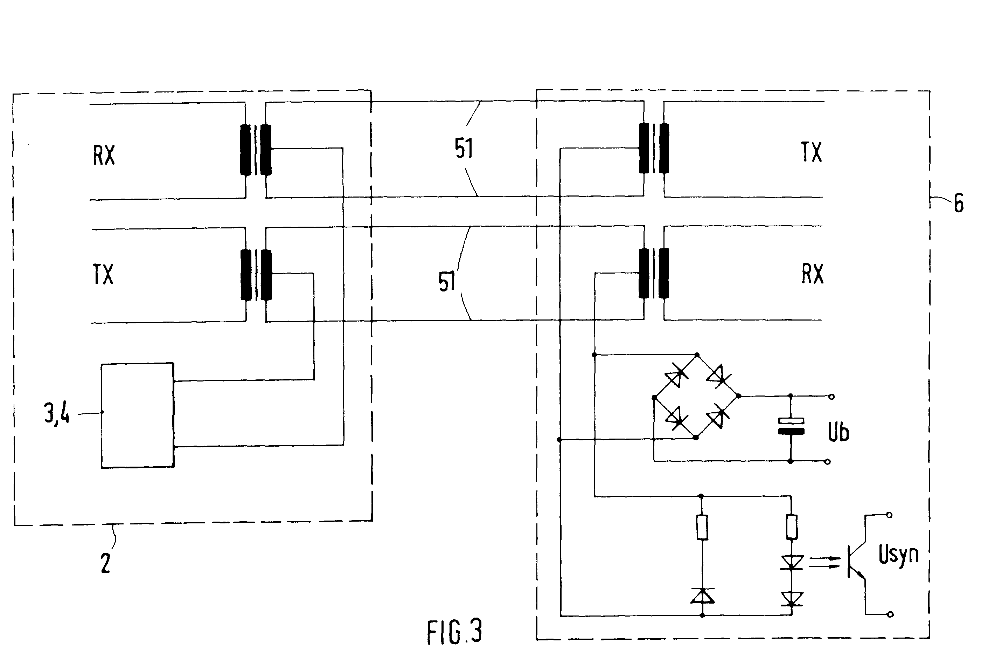

In einer weiteren Ausgestaltung der Erfindung ist es gemäß Fig. 3 möglich, die Polarität der Speisespannung im Rhythmus des Synchronisierungstaktes zu wechseln. In der Basisstation 6 wird diese Spannung gleichgerichtet und liefert die Versorgungsspannung U_{b}. Außerdem liegt die Spannung an antiparallel geschalteten Dioden. An einem Diodenzweig wird über einen Optokoppler die Synchronisierungsspannung U_{syn} bereitgestellt.

## Patentansprüche

1. Verfahren zur Synchronisierung von Basisstationen (6) in einem Funktelefonsystem, in dem der Speisegleichstrom die Basisstationen (6) von einer Vermittlungsanlage (1) aus über ein Kabel (51) versorgt,
**dadurch gekennzeichnet,**
daß in der Vermittlungsanlage (1) die Speisespannung für die Basisstationen (6) mit einer Synchronisierungsspannung derart moduliert wird, daß alle Basisstationen (6) zeitlich abwechselnd in einen Sendezustand oder in einen Empfangszustand geschaltet werden, und daß die modulierte Speisespannung über das Kabel (51) jeweils zu den Basisstationen (6) übertragen und dort demoduliert wird.

2. Verfahren nach Anspruch 1, dadurch gekennzeichnet, daß die Speisespannung als Träger mit der Synchronisierungsspannung amplitudenmoduliert wird.

3. Verfahren nach Anspruch 1, dadurch gekennzeichnet, daß in der Vermittlungsanlage (1) die Polarität der Speisespannung im Rhythmus der Synchronisierungsspannung gewechselt wird.

4. Verfahren nach Anspruch 1 und 3, dadurch gekennzeichnet, daß in den Basisstationen (6) zur Rückgewinnung der Gleichspannung die im Rhythmus der Synchronisierungsspannung umgepolte Speisespannung gleichgerichtet wird und daß aus dieser umgepolten Speisespannung über einen Zweig antiparallel geschalteter Dioden die Synchronisierungsspannung ausgekoppelt wird.

## Claims

1. A method of synchronising base stations (6) in a radiotelephone system in which the supply d.c. supplies the base stations (6) from an exchange (1) via a cable (51), characterised in that in the exchange (1) the supply voltage for the base stations (6) is modulated with a synchronising voltage such that all the base stations (6) are switched alternately into a transmitting state or a receiving state, and that the modulated supply voltage is in each case transmitted via the cable (51) to the base stations (6) and is demodulated therein.

2. A method according to Claim 1, characterised in that the supply voltage, serving as carrier, is amplitude-modulated with the synchronising voltage.

3. A method according to Claim 1, characterised in that in the exchange (1) the polarity of the supply voltage is changed in the timing of the synchronising voltage.

4. A method according to Claim 1 and 3, characterised in that in the base stations (6), for the recovery of the d.c. voltage, the supply voltage which has been reversed in polarity in the timing of the synchronising voltage is rectified, and that the synchronising voltage is output-coupled from this polarity-reversed supply voltage via a branch of anti-parallel-connected diodes.

## Revendications

1. Procédé de synchronisation de stations de base (6) dans un système de radiotéléphonie, dans lequel l'alimentation électrique est acheminée vers les stations de base (6) par l'intermédiaire d'un câble (51) provenant du standard téléphonique (1), caractérisé en ce que, dans le standard téléphonique (1), la tension d'alimentation des stations de base (6) est modulée avec une tension de synchronisation, de telle sorte que toutes les stations de base (6) sont commutées en alternance dans le temps dans un état d'émission ou dans un état de réception, et en ce que la tension d'alimentation modulée est transmise par le câble (51) vers chacune des stations de base (6) où elle sera démodulée.

2. Procédé selon la revendication 1, caractérisé en ce que la tension d'alimentation, en tant que tension du courant porteur, est modulée en amplitude avec la tension de synchronisation.

3. Procédé selon la revendication 1, caractérisé en ce que, dans le standard téléphonique (1), la polarité de la tension d'alimentation est inversée au rythme de la tension de synchronisation.

4. Procédé selon les revendications 1 et 3, caractérisé en ce que, pour rétablir la tension continue dans les stations de base (6), la tension d'alimentation, dont la polarité a été inversée au rythme de la tension de synchronisation, est démodulée et en ce que, à partir de cette tension d'alimentation, dont la polarité a été inversée, la tension de synchronisation est découplée par l'intermédiaire d'une branche d'un montage antiparallèle de diodes.
